# FASCICULE DE BREVET EUROPEEN

(11) **EP 1 588 916 B1**
(45) Date de publication et mention de la délivrance du brevet: **18.07.2007**
(21) Numéro de dépôt: 05007171.1
(22) Date de dépôt: 01.04.2005
(51) Int. Cl.: B60T 13/52, B25B 27/28

(54) **Dispositif et procédé de montage d'un soufflet sur un servomoteur pneumatique d'assistance de freinage pour véhicule automobile**
Vorrichtung und Verfahren zur Montage eines Balges auf einem pneumatischen Bremskraftverstärker für ein Kraftfahrzeug
Apparatus and method for mounting a bellows on a pneumatic brake booster for a motor vehicle

(30) Priorité: 21.04.2004 FR 0404243
(43) Date de publication de la demande: 26.10.2005
(73) Titulaire: ROBERT BOSCH GMBH, 70442 Stuttgart (DE)
(72) Inventeur: Simon Bacardit, Juan, 08013 Barcelone (ES); Sacristan, Fernando, 08348 Cabrils (ES); Berthomieu, Bruno, 08003 Barcelone (ES)
(74) Mandataire: Hurwic, Aleksander Wiktor

(56) Documents cités:
- DE-A- 3 924 672
- DE-A- 4 027 562
- DE-A- 10 022 383
- US-A- 5 031 507
- US-A1- 2003 097 744

## Description

L'invention a pour objet un dispositif de montage d'un soufflet sur l'extrémité arrière du servomoteur. L'invention a aussi pour objet un procédé de montage du soufflet sur l'extrémité arrière du servomoteur au moyen du dispositif de l'invention.

L'invention a pour but de diminuer des bruits émanant du servomoteur lors d'un freinage, les bruits étant notamment dû à des aspirations d'air à l'endroit dudit servomoteur. L'invention a également pour but de faciliter un montage d'un soufflet sur un servomoteur. Un but supplémentaire de l'invention est d'augmenter une durée de vie du filtre antibruit notamment en protégeant le filtre de saletés qui pourraient s'introduire dans le servomoteur.

Un servomoteur pneumatique d'assistance de freinage comporte généralement un boîtier avec une paroi en tôle, contenant une chambre avant à volume variable, séparée d'une chambre arrière, également à volume variable par une cloison formée par une membrane étanche et souple et une plaque jupe rigide. La jupe rigide entraîne un piston pneumatique prenant appui, par l'intermédiaire d'une tige de poussée, sur un piston primaire d'un maître cylindre d'un circuit hydraulique de freinage.

La chambre avant, placée du côté du maître cylindre, est reliée pneumatiquement à une source de vide. La chambre arrière, opposée à la chambre avant et placée du côté d'une commande de frein, est reliée pneumatiquement, de manière contrôlée par une valve, à une source de fluide propulseur. Au repos, c'est-à-dire lorsqu'un conducteur n'actionne pas de commande de frein, les chambres avant et arrière sont connectées entre elles, alors que la chambre arrière est isolée par rapport à la pression atmosphérique. Lors du freinage, on isole tout d'abord la chambre avant par rapport à la chambre arrière, puis on admet de l'air dans la chambre arrière.

Cette admission d'air a pour effet de propulser la cloison. La jupe rigide entraîne alors le piston pneumatique, qui lui-même entraîne le piston primaire du maître cylindre par l'intermédiaire de la tige de poussée.

Le conducteur actionne le servomoteur par l'intermédiaire d'une tige de commande montée mobile dans un moyeu monté coulissant à l'endroit de l'extrémité arrière du servomoteur. Par moyeu, on entend une pièce mécanique cylindrique, montée dans une autre pièce plus volumineuse, en l'occurrence l'extrémité arrière du servomoteur, et montée coaxialement sur un axe, en l'occurrence la tige de commande. L'extrémité arrière du servomoteur est formée par une cheminée cylindrique. La tige de commande est par exemple actionnée par le conducteur par l'intermédiaire d'une pédale de frein. La tige de commande est alors enfoncée à l'intérieur du servomoteur, en direction de la chambre avant du servomoteur.

La cheminée du servomoteur est débouchante vers l'extérieur, de manière à accueillir le moyeu. Aussi, il est connu de disposer un soufflet, à l'endroit de l'extrémité arrière du servomoteur, afin de protéger l'intérieur du boîtier du servomoteur des saletés. Une première extrémité du soufflet est montée sur la tige de commande, tandis qu'une deuxième extrémité est montée sur la cheminée. Lorsque la tige de commande coulisse dans le moyeu, le soufflet accompagne ladite tige.

Lors d'un freinage, il est nécessaire d'admettre de l'air dans la chambre arrière, généralement par l'intermédiaire de la cheminée cylindrique. Ces aspirations d'air, à l'endroit de la cheminée, sont à l'origine de bruits qui peuvent gêner le conducteur. Il est donc connu, pour amortir ces bruits, de disposer un filtre antibruit à l'endroit de la cheminée. On connaît notamment un joint annulaire monté dans le moyeu. La tige de commande traverse le filtre annulaire. Le soufflet est fixé non plus sur la tige de commande, mais sur une paroi du moyeu à l'endroit dudit filtre. Le filtre offre donc une surface de contact importante avec l'air extérieur. Le filtre est exposé à la poussière, aux sable et graviers, aux projections de liquide. Si le filtre s'encrasse trop, l'admission d'air dans le servomoteur peut être rendue difficile, et il est nécessaire de changer régulièrement ledit filtre.

Dans l'invention, on cherche à faciliter un montage du soufflet sur le servomoteur.

Pour protéger le filtre antibruit des pollutions, tout en lui permettant de jouer son rôle d'amortisseur de bruit, on dispose ledit filtre à l'intérieur du soufflet. Par intérieur du soufflet, on entend volume interne délimité par une paroi du soufflet. Le soufflet est généralement en matière souple élastique, tel que le caoutchouc. Le soufflet est donc imperméable aux pollutions, contrairement au filtre dans lequel les pollutions peuvent s'immiscer.

Dans l'invention, on utilise pour cela un filtre annulaire monté dans le soufflet à l'endroit d'une extrémité avant dudit soufflet. Le filtre, ainsi disposé, est moins soumis à la pollution, puisqu'il est protégé par le soufflet qui lui est en caoutchouc. Une liaison entre la tige de commande et une extrémité arrière du soufflet est hermétique, interdisant tous passages d'air ou de saletés. Une entrée d'air est ménagée à l'endroit de la liaison entre l'extrémité avant du soufflet et l'extrémité arrière du servomoteur: L'entrée d'air ménagée à l'endroit de contact entre le soufflet et l'extrémité arrière du servomoteur est équivalante à l'entrée d'air frontale existant dans l'état de la technique.

La nouvelle disposition du filtre antibruit, protégée par le matériau formant le soufflet, permet de protéger le filtre antibruit des pollutions extérieures. Ainsi, une durée de vie du filtre est augmentée.

Pour monter un tel soufflet sur un servomoteur, l'invention propose un dispositif de montage permettant de faciliter ledit montage et de diminuer un temps de montage. Pour cela, le dispositif est muni de trois parties distinctes. Une première partie, ou capuche, est montée sur l'extrémité arrière de la tige de commande. Par extrémité arrière, ou libre, de la tige de commande, on entend extrémité opposée à l'extrémité montée dans le moyeu. L'extrémité arrière de la capuche a une forme telle qu'elle peut pénétrer aisément à l'intérieur d'une deuxième partie de ce dispositif de montage.

La deuxième partie du dispositif de montage est une pince extensible. La capuche doit pouvoir pénétrer dans la pince par l'extrémité la plus étroite de la pince, en écartant les parois de ladite pince. La pince est logée à l'intérieur d'une troisième partie du dispositif.

La troisième partie du dispositif comporte par ailleurs un logement dans lequel est monté le soufflet. Une extrémité arrière du soufflet est fixée sur l'extrémité la plus étroite de la pince. Une extrémité avant dudit soufflet, débouche vers l'extérieur de la troisième partie.

Un tel dispositif de montage permet d'assurer un bon positionnement du soufflet sur le servomoteur. En effet, la pince extensible permet de centrer la troisième partie'du dispositif par rapport au servomoteur, et la troisième partie permet, elle, le centrage du soufflet.

De plus, le montage des extrémités avant et arrière du soufflet sur le servomoteur est simultané. Un tel dispositif permet d'optimiser un temps de montage du soufflet sur le servomoteur.

La présente invention sert en combinaison avec un soufflet destiné à être monté sur une extrémité avant d'une cheminée d'un servomoteur pneumatique d'assistance de freinage pour véhicule automobile, caractérisé en ce qu'il comporte un filtre antibruit annulaire disposé à l'intérieur du soufflet, à l'endroit d'une extrémité avant dudit soufflet.

L'invention a également pour objet un soufflet, caractérisé en ce qu'une paroi interne dudit soufflet comporte un labyrinthe.

L'invention a également pour objet un servomoteur pneumatique d'assistance de freinage pour véhicule automobile comprenant
- un boîtier de servomoteur, une extrémité arrière du boîtier étant munie d'une cheminée cylindrique,
- un moyeu cylindrique monté coulissant dans la cheminée,
- une tige de commande montée mobile dans le moyeu,
- un soufflet, solidaire par une extrémité avant de la cheminée cylindrique, et par une extrémité arrière à la tige de commande,
- un filtre antibruit,
caractérisé en ce que le soufflet est un soufflet selon la présente invention.

La présente invention a également pour objet un servomoteur, caractérisé en ce qu'il comporte une bague d'étanchéité disposée entre une paroi interne de la cheminée et une paroi externe du moyeu, l'extrémité avant du soufflet étant fixée sur la bague.

La présente invention a également pour objet un servomoteur, caractérisé en ce que l'extrémité avant du soufflet est encliquetée sur la bague.

La présente invention a également pour objet un servomoteur, caractérisé en ce qu'il comporte une entrée d'air ménagée à l'endroit de l'extrémité avant du soufflet.

L'invention a également pour objet un dispositif de montage d'un soufflet sur une cheminée cylindrique d'un servomoteur dans laquelle est logée un moyeu cylindrique et une tige de commande, caractérisé en ce qu'il comporte
- une pince extensible, dont une première extrémité est solidaire d'une extrémité arrière du soufflet,
- un support du soufflet, muni d'un premier logement dans lequel est logé le soufflet, et d'un second dans lequel est logée la pince extensible,
- un cône d'introduction destiné à être monté sur une extrémité arrière libre de la tige de commande, une extrémité conique du cône d'introduction étant apte à traverser le soufflet depuis son extrémité avant jusqu'à son extrémité arrière.

La présente invention a également pour objet un dispositif, caractérisé en ce que la pince flexible a initialement une forme conique, une extrémité conique étant solidaire du soufflet, l'extrémité conique étant apte à s'écarter au passage du cône d'introduction.

La présente invention a également pour objet un dispositif, caractérisé en ce qu'un contour de l'extrémité avant du soufflet suit une extrémité avant du support de soufflet.

L'invention a également pour objet un procédé de montage d'un soufflet sur la cheminée du servomoteur au moyen du dispositif de montage de l'invention, caractérisé en ce qu'il comprend les étapes suivantes consistant à :
- introduire le cône d'introduction sur l'extrémité libre de la tige de commande,
- amener le support de soufflet muni du soufflet et de la pince flexible jusqu'au cône d'introduction, de manière à introduire le cône d'introduction dans le support de soufflet, jusqu'à la pince flexible et à loger la cheminée dans le soufflet,
- encliqueter l'extrémité avant du soufflet sur l'extrémité arrière de la cheminée par compression de l'extrémité avant du support de soufflet sur le servomoteur,
- retirer le support de soufflet, la pince flexible et le cône d'introduction en maintenant l'extrémité avant du soufflet sur la cheminée.

L'invention sera mieux comprise à la lecture de la description qui suit et à l'examen des figures qui l'accompagnent. Celles-ci sont présentées à titre indicatif et nullement limitatif de l'invention. Les figures représentent :
- Figure 1 : Une représentation d'un servomoteur muni d'un soufflet et d'un filtre de l'invention ;
- Figure 2 : Une représentation du servomoteur de l'invention, à l'endroit d'une extrémité arrière ;
- Figures 3 (a et b) : Une représentation d'une pièce appartenant à un dispositif de montage d'un soufflet de l'invention ;
- Figures 4 (a, b, c) : Une représentation de trois étapes de montage d'un soufflet sur un servomoteur au moyen d'un dispositif de montage de l'invention.

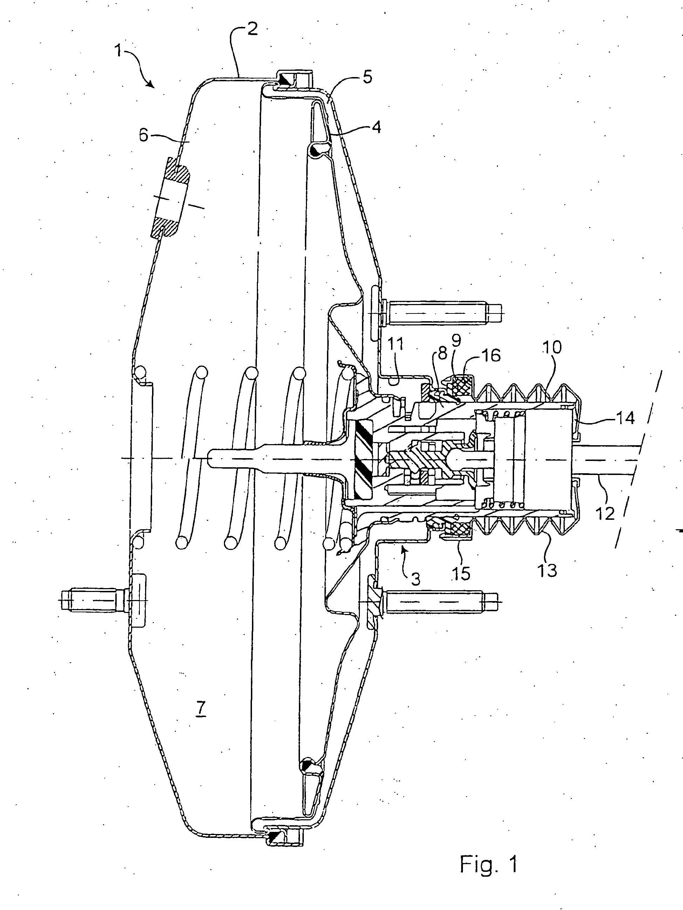

Sur la figure 1 est représenté un servomoteur 1. Un tel servomoteur comprend une enveloppe rigide 2 formant un boîtier 7. Une extrémité arrière du boîtier 7 forme une cheminée 3 cylindrique. Une cloison mobile 4 délimite une chambre arrière 5 et une chambre avant 6 à l'intérieur du boîtier 7. Les chambres arrière 5 et avant 6 ont des volumes variables et complémentaires. La cloison mobile 4 est solidaire d'un moyeu cylindrique 8 monté coulissant à l'intérieur de la cheminée 3. Une bague d'étanchéité 9 est montée entre une paroi externe 10 du moyeu 8 et une paroi interne 11 de la cheminée 3, afin de garantir une étanchéité entre le moyeu 8 et la cheminée 3. Une tige de commande 12 est montée mobile à l'intérieur du moyeu 8.

Une extrémité arrière 14 du soufflet 13 est solidaire de la tige de commande 12. Une extrémité avant 15 du soufflet 13 est solidaire de la bague d'étanchéité 9. Une forme de l'extrémité avant 15 du soufflet 13 est telle qu'elle peut s'encliqueter sur une protubérance de la bague d'étanchéité 9. Dans un autre exemple de réaliser de l'invention, on peut prévoir que l'extrémité avant 15 du soufflet 13 est fixée par tout autre moyen sur la bague d'étanchéité 9.

Un filtre annulaire 16 est monté à l'intérieur du soufflet, à l'endroit de son extrémité avant. Aussi, lorsque le soufflet est monté sur le servomoteur 1, le filtre 16 est protégé par le soufflet 13.

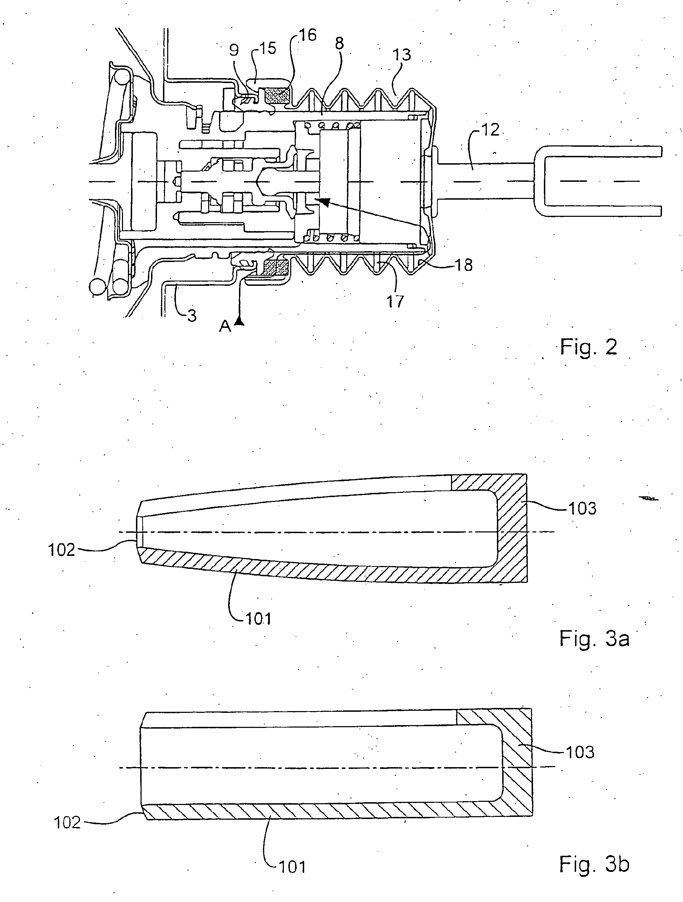

Sur la figure 2, on peut voir un agrandissement de la figure 1 à l'endroit du soufflet 13. Une entrée d'air A est ménagée à l'endroit de l'extrémité avant 15 du soufflet 13. Pour cela, la liaison entre le soufflet 13 et la bague 9 d'étanchéité est souple, afin d'autoriser un passage de l'air depuis l'extérieur du servomoteur vers l'intérieur.

Dans l'exemple représenté à la figure 2, le soufflet 13 est par ailleurs muni d'un labyrinthe 17. Par labyrinthe 17, on entend une série d'ailettes ou de rainures ménagées sur une paroi interne 18 du soufflet 13. Par paroi interne 18 du soufflet 13, on entend paroi dirigée vers le moyeu 8. Le labyrinthe 17 permet d'augmenter un filtrage des saletés. Ainsi, si des saletés ont pénétré à l'intérieur du soufflet 13, elles sont piégées dans le labyrinthe 17. On diminue encore le risque que des saletés pénètrent dans le servomoteur 1.

Le soufflet 13 de l'invention peut être monté aisément sur un servomoteur 1 grâce à un dispositif 100 de montage de l'invention.

Sur les figures 3a et 3b, est représentée une pince extensible 101 appartenant au dispositif 100, dans deux configurations différentes. Sur la figure 3a, la pince 101 est dans une position repos. Par position repos, on entend position dans laquelle une extrémité avant 102 de la pince 101 a un diamètre strictement inférieur à une extrémité arrière 103 de la pince 101.

Sur la figure 3b, la pince 101 est en position écartée, c'est-à-dire que l'extrémité avant 102 a un diamètre équivalant au diamètre de l'extrémité arrière 103. La pince 101 est donc une pince souple extensible. La souplesse de la pince 101 permet de faire pénétrer à l'intérieur de ladite pince 101 une pièce ayant un diamètre supérieur au diamètre repos de l'extrémité avant 102.

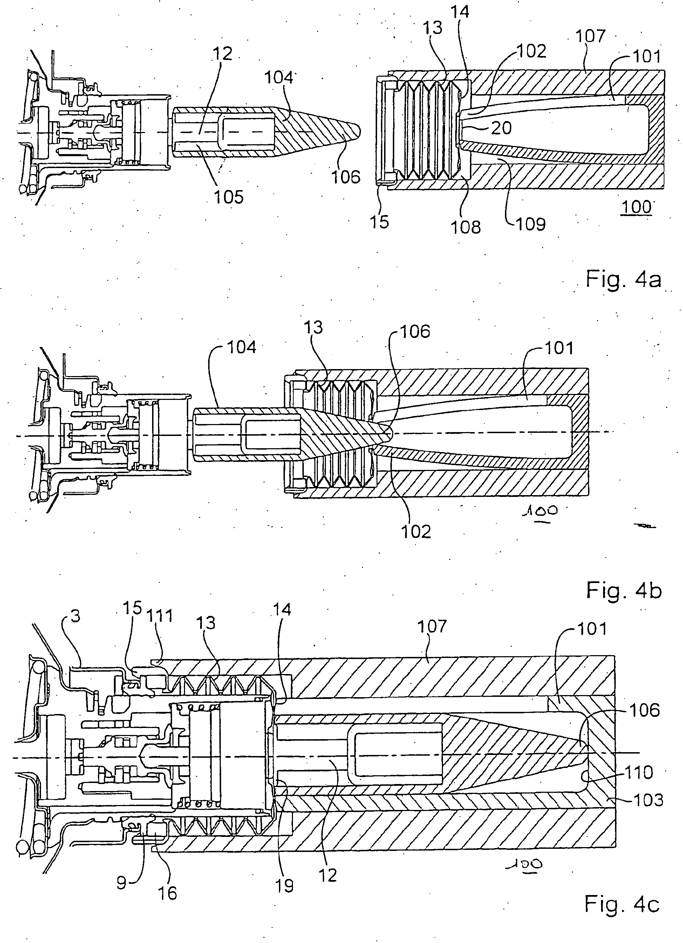

Sur les figures 4a, 4b et 4c, on peut voir trois étapes d'un procédé de montage du soufflet 13 sur un servomoteur 1 à l'aide du dispositif 100 de l'invention.

Un cône d'introduction 104 du dispositif de montage 100 est monté sur la tige de commande 12 du servomoteur. Le cône d'introduction 104 comporte un logement 105, à l'endroit d'une extrémité avant, destiné à recevoir la tige de commande 12. Une extrémité arrière 106 du cône d'introduction 104 a une forme générale conique.

Un support de soufflet 107 du dispositif de montage 100 est muni, à l'endroit d'une extrémité avant, d'un premier logement 108 dans lequel est monté le soufflet 13. L'extrémité avant 15 du soufflet 13 débouche vers l'extérieur du logement 108. L'extrémité arrière 14 du soufflet 13 est solidaire de l'extrémité avant 102 de la pince 101. La pince 101 est elle-même logée à l'intérieur d'un second logement 109 ménagé dans une partie arrière du support 107.

L'extrémité arrière 14 du soufflet 13 est munie d'un orifice 20 permettant de laisser passer la tige de commande 12. L'extrémité la plus étroite 102 de la pince 101 est solidaire de l'extrémité arrière 14 du soufflet 13 par l'intermédiaire de l'orifice 20.

Sur la figure 4a, la pince 101 est en position repos.

Sur la figure 4b, le cône d'introduction 104 du dispositif 100 traverse le soufflet 13 de part en part, de manière à ce que l'extrémité conique 106 du cône d'introduction 104 soit introduite dans la pince extensible 101. Le cône d'introduction 106 est apte à écarter les parois de la pince 101 à l'endroit de l'extrémité avant 102.

On continue d'introduire le cône d'introduction 104 à l'intérieur de pince 101, jusqu'à ce que, comme cela est représenté sur la figure 4c, l'extrémité conique 106 du cône d'introduction vienne en butée contre une paroi interne 110 de l'extrémité arrière 103 de la pince 101.

Dans le même temps, le soufflet est amené sur la cheminée 3. L'extrémité arrière 14 du soufflet 13 est amenée sur la tige de commande 12. Par exemple, afin d'assurer que l'extrémité arrière 14 du soufflet 13 ne coulisse pas le long de la tige de commande 12, il est possible de munir la tige de commande 12 d'une protubérance 19. La protubérance 19 s'étend radialement en saillie sur la tige de commande. Une fois que la protubérance 19 a traversé l'orifice 20 de l'extrémité avant 14 du soufflet 13, ladite extrémité avant 14 ne peut plus coulisser le long de la tige de commande 12.

L'extrémité avant 15 du soufflet 13 est encliquetée sur la bague d'étanchéité 9. Pour cela, une extrémité avant 111 du support de soufflet 107 est chanfreinée, de manière à suivre un contour extérieur de l'extrémité avant 15 du soufflet 13. Ainsi, l'extrémité avant 111 du support de soufflet 107 est apte à comprimer l'extrémité avant 15 du soufflet 13 contre la bague d'étanchéité 9, de manière à encliqueter le soufflet 13 sur la bague 9.

Si on souhaite monter un filtre antibruit 16 annulaire à l'endroit de la liaison entre le soufflet 15 et la cheminée 3, ledit filtre 16 doit être monté à l'intérieur du soufflet 13, avant de faire pénétrer le cône d'introduction 104 dans le soufflet 13.

## Revendications

1. Dispositif (100) dé montage d'un soufflet sur une cheminée (3) cylindrique d'un servomoteur (1) dans laquelle est logée un moyeu (8) cylindrique et une tige (12) de commande, **caractérisé en ce qu**'il comporte
- une pince (101) extensible, dont une première extrémité (102) est destinée à être solidaire d'une extrémité arrière (14) du soufflet,
- un support (107) du soufflet, muni d'un premier logement (108) dans lequel est apte à être logé le soufflet, et d'un second logement (109) dans lequel est logé la pince extensible,
- un cône d'introduction (104) destiné à être monté sur une extrémité libre de la tige de commande, une extrémité conique (106) du cône d'introduction étant apte à traverser le soufflet depuis son extrémité avant (15) jusqu'à son extrémité arrière.

2. Dispositif selon la revendication 1, **caractérisé en ce que** la pince flexible a initialement une forme conique, une extrémité conique étant destinée à être solidaire du soufflet, l'extrémité conique étant apte à s'écarter au passage du cône d'introduction.

3. Dispositif selon l'une des revendications 1 ou 2, **caractérisé en ce que** l'extrémité avant du support est telle qu'un contour de l'extrémité avant du soufflet est apte à suivre ladite extrémité avant (111) du support de soufflet.

4. Procédé de montage d'un soufflet sur la cheminée du servomoteur au moyen du dispositif selon l'une des revendications 1 à 3, **caractérisé en ce qu**'il comprend les étapes suivantes consistant à:
- introduire le cône d'introduction (104) sur l'extrémité libre de la tige (12) de commande,
- amener le support (107) de soufflet muni du soufflet (13) et de la pince (101) flexible jusqu'au cône d'introduction, de manière à introduire le cône d'introduction dans le support de soufflet, jusqu'à la pince flexible et à loger la cheminée (3) dans le soufflet,
- encliqueter l'extrémité avant (15) du soufflet sur l'extrémité arrière de la cheminée par compression de l'extrémité avant du support de soufflet sur le servomoteur,
- retirer le support de soufflet, la pince flexible et le cône d'introduction en maintenant l'extrémité avant du soufflet sur la cheminée.

## Claims

1. Device (100) for mounting a bellows on a cylindrical hollow shaft (3) of a booster (1) in which hollow shaft a control rod (12) and a cylindrical hub (8) are housed, **characterized in that** this device comprises
- an expanding gripper (101) a first end (102) of which is intended to be secured to a rear end (14) of the bellows,
- a bellows support (107) equipped with a first housing (108) in which the bellows can be housed, and with a second housing (109) in which the expanding gripper is housed,
- an insertion cone (104) intended to be mounted on a free end of the control rod, a conical end (106) of the insertion cone being able to pass through the bellows from its front end (15) to its rear end.

2. Device according to Claim 1, **characterized in that** the flexible gripper initially has a conical shape, a conical end being intended to be secured to the bellows, the conical end being able to open upon the passage of the insertion cone.

3. Device according to one of Claims 1 and 2, **characterized in that** the front end of the support is such that a contour of the front end of the bellows is able to conform to the said front end (111) of the bellows support.

4. Method of mounting a bellows on the hollow shaft of the booster by means of the device according to one of Claims 1 to 3, **characterized in that** it involves the following steps which consist in:
- introducing the insertion cone (104) onto the free end of the control rod (12),
- bringing the bellows support (107) fitted with the bellows (13) and with the flexible gripper (101) as far as the insertion cone so as to introduce the insertion cone into the bellows support as far as the flexible gripper and house the hollow shaft (3) in the bellows,
- clipping the front end (15) of the bellows onto the rear end of the hollow shaft by compressing the front end of the bellows support onto the booster,
- withdrawing the bellows support, the flexible gripper and the insertion cone while at the same time holding the front end of the bellows on the hollow shaft.

## Patentansprüche

1. Vorrichtung (100) zum Anbringen eines Balgs an einem zylindrischen Schacht (3) eines Servomotors (1), in dem eine zylindrische Nabe (8) und eine Steuerstange (12) angeordnet sind, **dadurch gekennzeichnet, dass** sie folgendes aufweist:
- eine aufweitbare Klemme (101), bei der ein erstes Ende (102) mit einem hinteren Ende (14) des Balgs fest verbunden sein soll,
- einen Balgträger (107), der mit einer ersten Aufnahme (108), in welcher der Balg aufgenommen sein kann, und mit einer zweiten Aufnahme (109) versehen ist, in welcher die aufweitbare Klemme aufgenommen ist,
- einen Einführungskonus (104), der dazu bestimmt ist, an einem freien Ende der Steuerstange angebracht zu sein, wobei ein konisches Ende (106) des Einführungskonus den Balg von seinem vorderen Ende (15) bis zu seinem hinteren Ende durchqueren kann.

2. Vorrichtung nach Anspruch 1, **dadurch gekennzeichnet, dass** die flexible Klemme ursprünglich eine konische Form besitzt, wobei ein konisches Ende mit dem Balg fest verbunden sein soll und sich das konische Ende bei der Durchführung des Einführungskonus spreizen kann.

3. Vorrichtung nach Anspruch 1 oder 2, **dadurch gekennzeichnet, dass** das vordere Ende des Trägers so ausgebildet ist, dass eine Kontur des vorderen Endes des Balgs sich an das vordere Ende (111) des Balgträgers anpassen kann.

4. Verfahren zum Anbringen eines Balgs am Schacht des Servomotors mittels einer Vorrichtung nach einem der Ansprüche 1 bis 3, **dadurch gekennzeichnet, dass** es die folgenden Schritte umfasst, bei denen:
- der Einführungskonus (104) auf das freie Ende der Steuerstange (12) geschoben wird,
- der mit dem Balg (13) und der flexiblen Klemme (101) versehene Balgträger (107) bis zum Einführungskonus bewegt wird, so dass der Einführungskonus bis zur flexiblen Klemme in den Balgträger eingeführt und der Schacht (3) in den Balg eingesetzt wird,
- das vordere Ende (15) des Balgs durch Drücken des vorderen Endes des Balgträgers auf den Servomotor am hinteren Ende des Schachts verrastet wird,
- der Balgträger, die flexible Klemme und der Einführungskonus entfernt werden, wobei das vordere Ende des Balgs am Schacht gehalten wird.
